# EUROPÄISCHE PATENTSCHRIFT

(11) **EP 2 493 735 B1**
(45) Veröffentlichungstag und Bekanntmachung des Hinweises auf die Patenterteilung: **08.08.2018**
(21) Anmeldenummer: 10773255.4
(22) Anmeldetag: 21.10.2010
(51) Int. Cl.: B60T 13/24, B60T 13/57

(54) **UNTERDRUCKBREMSKRAFTVERSTÄRKER FÜR EINE KRAFTFAHRZEUGBREMSANLAGE**
VACUUM BRAKE SERVO FOR A MOTOR VEHICLE BRAKING SYSTEM
SERVOFREIN À DÉPRESSION POUR UN SYSTÈME DE FREINAGE DE VÉHICULE À MOTEUR

(30) Priorität: 29.10.2009 DE 102009051236
(43) Veröffentlichungstag der Anmeldung: 05.09.2012
(73) Patentinhaber: Lucas Automotive GmbH, 56070 Koblenz (DE)
(72) Erfinder: CALVO MARTINEZ, José Manuel, 56642 Kruft (DE); SPARFELD, Jens, 56357 Miehlen (DE); KNIGGE, Detlev, 56220 Kaltenengers (DE); ZINNKANN, Ulrich, 56068 Koblenz (DE)
(74) Vertreter: Thum, Bernhard
(86) Internationale Anmeldenummer: PCT/EP2010/006447
(87) Internationale Veröffentlichungsnummer: WO 2011/050925

(56) Entgegenhaltungen:
- DE-A1-102008 037 048
- GB-A- 2 271 402

## Beschreibung

Die vorliegende Erfindung betrifft einen Unterdruckbremskraftverstärker für eine Kraftfahrzeugbremsanlage umfassend ein stangenförmiges Krafteingangsglied, das mit einem Bremspedal gekoppelt oder koppelbar ist, ein Steuerventil, das über das Krafteingangsglied betätigbar ist, eine Kammeranordnung mit einer Unterdruckkammer, die mit einer Unterdruckquelle verbindbar ist, sowie mit einer Arbeitskammer, die nach Maßgabe der Betätigung des Krafteingangsglied wahlweise mit der Unterdruckkammer und mit der Umgebungsatmosphäre verbindbar ist, wobei das Steuerventil einen über das Krafteingangsglied betätigbaren Steuerkolben aufweist, der zusammen mit einem Ventilelement einen Dichtsitz mit einem Dichtsitzdurchmesser zwischen Arbeitskammer und Umgebungsatmosphäre bildet, wobei im Bereich nahe dem Dichtsitz ein Führungskanal vorgesehen ist, durch den beim Öffnen des Dichtsitzes infolge einer Druckdifferenz Luft aus der Umgebungsatmosphäre in die Arbeitskammer einströmt.

Im Zuge der technischen Entwicklung auf dem Gebiet der Kraftfahrzeugtechnik wird es möglich, den Geräuschpegel im Fahrgastinnenraum eines Kraftfahrzeugs immer weiter zu reduzieren. Dies kann insbesondere durch Reduzierung der Emission derartiger Geräusche aber auch dadurch erreicht werden, dass der Fahrgastraum besser akustisch isoliert wird. Allerdings werden dadurch andere im Fahrzeug entstehende Geräusche, die früher von den Antriebs- und Abrollgeräuschen überdeckt wurden, leichter wahrgenommen. Darunter fällt beispielsweise das Ansauggeräusch eines Unterdruckbremskraftverstärkers, das dann auftritt, wenn der Bremskraftverstärker aus seiner Ruhestellung betätigt wird. In Folge der Betätigung wird die im Ausgangszustand evakuierte Arbeitskammer mit der Umgebungsatmosphäre verbunden, woraufhin zum Teil unter hoher Geschwindigkeit Umgebungsluft in die Arbeitskammer einströmt, um in an sich bekannter Weise eine Servounterstützung für die Bremsbetätigung bereitzustellen. Aufgrund der verhältnismäßig hohen Strömungsgeschwindigkeiten kann es zu Strömungsgeräuschen in Frequenzbereichen kommen, die im Bereich des menschlichen Hörvermögens liegen. Dabei werden erfahrungsgemäß insbesondere solche Geräusche als störend empfunden, die im Frequenzbereich zwischen 2,4 kHz und 8 kHz auftreten.

Im Stand der Technik sind verschiedene Lösungen bekannt, um Einströmgeräusche in Unterdruckbremskraftverstärkern zu reduzieren.

So zeigt der gattungsbildende Stand der Technik gemäß Dokument DE 32 43 093 A1 einen Unterdruckbremskraftverstärker, bei dem im Steuerventil ein Schaumstoffelement vorgesehen ist, dessen Geometrie derart gestaltet ist, dass die Querschnittsfläche des Führungskanals reduziert wird. Dieser Stand der Technik sieht beispielsweise mehrere zylindrische Öffnungen im Schaumstoffelement vor, die sich parallel zu dem Krafteingangsglied erstrecken.

Aus dem Dokument DE 29 18 734 A1 ist eine vergleichbare Lösung mit einem Schaumstoffelement bekannt.

Schließlich zeigt das Dokument DE 39 24 672 A1 einen Unterdruckbremskraftverstärker, bei dem in dem Steuerventil eine Düsenanordnung mit verhältnismäßig komplizierter Geometrie angeordnet ist, die der angesaugten Luft eine laminare Strömung verleihen soll.

Dokument DE 10 2008 037 048 A1 zeigt einen Ventilkolben für einen Bremskraftverstärker mit einem konzentrischen Dichtsitz, welcher einen zweiten Dichtsitz axial überragt, wobei der konzentrische Dichtsitz zur Drosselung des Luftvolumenstroms wenigstens eine Ausnehmung aufweist.

Im Dokument GB 2 271 402 A wird ein pneumatischer Bremskraftverstärker offenbart, der eine Umschaltvorrichtung umfasst, die den Bremskraftverstärker auf einem erhöhten Verstärkungsfaktor umschaltet, wenn die Geschwindigkeit mit der ein Fahrer zu Beginn ein Bremspedal betätigt einen Schwellenwert überschreitet.

Sämtliche Lösungen aus dem Stand der Technik sehen zusätzliche Teile mit verhältnismäßig komplizierter Geometrie vor, die die Herstellungskosten derartiger Bremskraftverstärker in unerwünschter Weise erhöhen. Darüber hinaus kann es bei der Verwendung von Schaumstoffteilen zu Lebensdauerproblemen kommen.

Es ist eine Aufgabe der vorliegenden Erfindung, einen Unterdruckbremskraftverstärker der eingangs bezeichneten Art bereitzustellen, bei dem mit einfachen und kostengünstigen Mitteln eine wirksame Reduzierung der Einströmgeräusche erreicht werden kann.

Diese Aufgabe wird durch einen Unterdruckbremskraftverstärker der eingangs bezeichneten Art gelöst, bei dem vorgesehen ist, dass sich der Führungskanal in axialer Richtung mit konstantem Strömungsdurchmesser über eine vorbestimmte Länge erstreckt, wobei der Strömungsdurchmesser kleiner oder gleich dem Dichtsitzdurchmesser ist.

Es wurde von den Erfindern erkannt, dass die Einströmgeräusche bei einem Unterdruckbremskraftverstärker auf einfache Weise dadurch reduziert werden können, dass dem Führungskanal über eine vorbestimmte Länge ein konstanter Strömungsdurchmesser verliehen wird, der kleiner ist, als der effektive Strömungsdurchmesser des nachgeschalteten Dichtsitzes zwischen Umgebungsatmosphäre und Arbeitskammer. Auf diese Weise kann im Führungskanal eine Beruhigen der bei einer Aktivieung des Unterdruckbremskraftverstärkers auftretenden Luftströmung erreicht werden. Dadurch werden die eingangs angesprochenen, als störend empfundenen Geräusche in einem Frequenzbereich von 2,4 kHz bis 8 kHz gedämpft bzw. in einen anderen Frequenzbereich verschoben, in dem sie weniger störend oder für das menschliche Gehör überhaupt nicht mehr wahrnehmbar sind.

Dazu ist erfindungsgemäß vorgesehen, dass das Steuerventil eine Klemmhülse aufweist, die zum Festklemmen eines Befestigungsabschnitts des Ventilelements in einem Steuerventilgehäuse des Steuerventils vorgesehen ist. Derartige Klemmhülsen können beispielsweise durch am Krafteingangsglied angreifenden Rückstellfedern im Steuerventil gegen eine entsprechende Schulter eines Steuerventilgehäuses gedrückt werden. Zwischen der Klemmhülse und der Schulter des Steuerventilgehäuses kann beispielsweise ein Steuerventilelement eingeklemmt werden. Der Führungskanal wird dabei zumindest teilweise von einem radial inneren zylindrischen Abschnitt der Klemmhülse gebildet. Mit anderen Worten ist die Klemmhülse unmittelbar als Komponente ausgeführt, die den Führungskanal bildet und dementsprechend - ohne zusätzliche Bauteile - mit der gewünschten Geometrie, d.h. mit einem Führungskanal mit einem vorbestimmten Strömungsdurchmesser über eine vorbestimmte Länge, ausgebildet ist.

Eine Weiterbildung der Erfindung sieht vor, dass der Führungskanal von einem gesonderten Bauteil gebildet wird. So ist es erfindungsgemäß ebenso möglich, dass der Führungskanal zumindest teilweise von einer Führungskanalhülse gebildet ist, die in dem Steuerventilgehäuse, vorzugsweise unter Vermittlung der Klemmhülse, gelagert ist. Dadurch wird es möglich, herkömmliche Komponenten eines bereits produzierten Unterdruckbremskraftverstärkers weiter zu verwenden und zur Reduzierung des Strömungsdurchmessers gemäß der vorliegenden Erfindung ein zusätzliches Bauteil anzubringen, das nichtsdestotrotz verhältnismäßig einfach aufgebaut und daher kostengünstig herzustellen ist. Die Führungskanalhülse kann aus hartem formstabilem Kunststoffmaterial hergestellt sein. Ferner ist es erfindungsgemäß möglich, dass die Führungskanalhülse einen Radialvorsprung aufweist, mit dem sie in dem Steuerventilgehäuse, vorzugsweise an einer Durchmesserstufe der Klemmhülse, gelagert ist. Mit diesem Radialvorsprung kann die Führungskanalhülse an der Klemmhülse angebracht werden, beispielsweise wiederum unter Nutzung einer ohnehin vorgesehenen Feder. Eine solche Feder kann beispielsweise die Rückstellfeder für das Kraft eingangsglied oder eine Vorspannfeder sein, die zur Vorspannung des Ventilelements auf dem Dichtsitz vorgesehen ist.

Ferner kann erfindungsgemäß vorgesehen sein, dass sich die Führungskanalhülse ausgehend von dem Radialvorsprung in wenigstens einer axialen Richtung zur Ausbildung des Führungskanals erstreckt. Je nach Bedarf kann so die Führungskanalhülse in der gewünschten Länge ausgebildet werden, um die angestrebte Beruhigung der Luftströmung zu erreichen.

Eine Weiterbildung der Erfindung sieht vor, den Strömungsquerschnitt stufenweise zu verkleinern. In diesem Zusammenhang kann vorgesehen sein, dass der Führungskanal gestuft mit Strömungskanalabschnitten unterschiedlichen Strömungsdurchmessern ausgebildet ist und sich in Richtung zum Ventilsitz hin verengt, wobei der Strömungskanalabschnitt mit dem kleinsten Strömungsdurchmesser kleiner oder gleich dem Dichtsitzdurchmesser ist. Vorzugsweise ist dabei vorgesehen, dass der Führungskanal im Bereich von Strömungsdurchmesserstufen abgerundet ausgebildet ist, um harmonische Übergänge zwischen den Abschnitten unterschiedlichen Durchmessers zu erreichen.

Darüber hinaus kann zur Beruhigung der Strömung ferner beitragen, dass der Führungskanal in seinem der Umgebungsatmosphäre zugewandten Eintrittsbereich harmonisch abgerundet ausgebildet ist. Dadurch kommt es zu einem turbulenzarmen Einströmen der von der Arbeitskammer beim Öffnen des Ventilsitzes angesaugten Umgebungsluft in den Führungskanal, was die Laminarität der Strömung und damit die Strömungsberuhigung fördert.

Eine Weiterbildung der Erfindung sieht vor, dass sich das Krafteingangsglied durch den Führungskanal im wesentlichen konzentrisch zu diesem hindurch erstreckt.

Ferner kann erfindungsgemäß vorgesehen sein, dass das wenigstens eine Filterelement stromaufwärts des Führungskanals angeordnet ist. Dieses Filterelement kann zur Filterung der angesaugten Umgebungsluft ausgebildet sein.

Empirische Ermittlungen sowie Versuche haben gezeigt, dass besonders gute Ergebnisse erzielt werden, wenn die vorbestimmte Länge des Führungskanals zwischen 6 mm und 14 mm liegt. Ferner wurde im Rahmen dieser Versuche auch gezeigt, dass es zusätzlich oder alternativ für die Beruhigung der Luftströmung förderlich ist, wenn der Strömungsdurchmesser derart bemessen ist, dass sich eine Strömungsöffnung mit einer effektiven Fläche zwischen 110 mm² und 160 mm² ergibt. Wird durch den Führungskanal das Krafteingangsglied hindurchgeführt, so ist dessen Querschnittsfläche, die nicht zum Strömungsquerschnitt beiträgt, entsprechend zu berücksichtigen. Die Erfindung wird im Folgenden beispielhaft anhand der beiliegenden Figuren erläutert. Es stellen dar:
- Fig. 1: eine Schnittansicht durch den Bereich des Steuerventils eines Unterdruckbremskraftverstärkers gemäß einem ersten Ausführungsbeispiel der vorliegenden Erfindung;
- Fig. 2: eine Ansicht entsprechend Fig. 1 eines zweiten Ausführungsbeispiels der vorliegenden Erfindung; und
- Fig. 3: eine Ansicht entsprechend Fig. 1 und 2 eines dritten Ausführungsbeispiels der vorliegenden Erfindung.

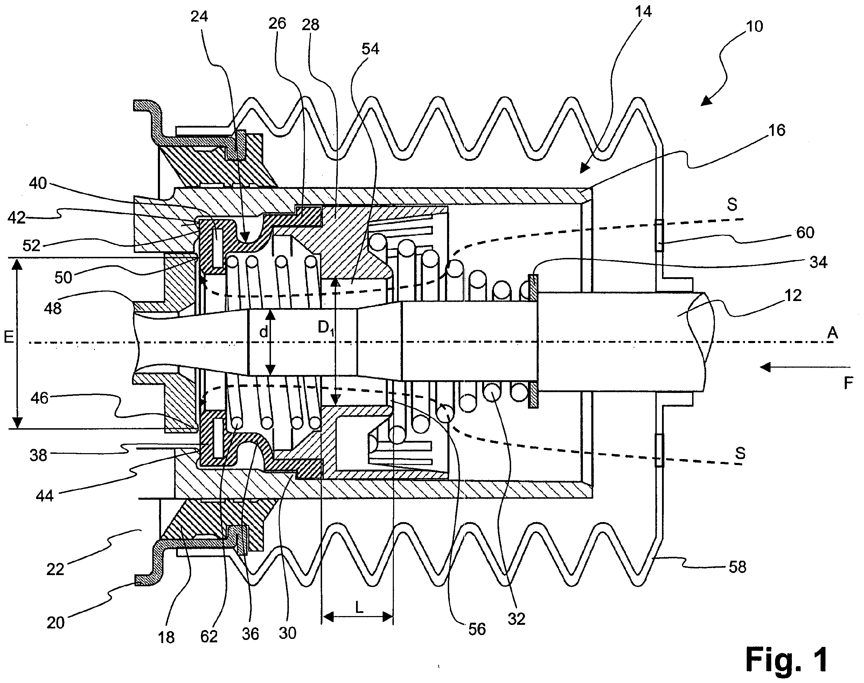

In Fig. 1 ist ein Ausschnitt eines erfindungsgemäßen Unterdruckbremskraftverstärkers in achsenthaltender Längsschnittansicht gezeigt und allgemein mit 10 bezeichnet. Dieser umfasst ein Krafteingangsglied 12, das an seinem in Fig. 1 rechten Ende zu einer Verbindungsmimik weist, mit der es mit einem Bremspedal gekoppelt oder koppelbar ist. An seinem in Fig. 1 linken Ende weist das Krafteingangsglied 12 in Richtung zu einer nicht gezeigten Hauptbremszylinderanordnung. In dem Unterdruckbremskraftverstärker 10 ist um das Krafteingangsglied 12 herum ein Steuerventil 14 angeordnet. Dieses umfasst ein Steuerventilgehäuse 16, das über eine Dichtung 18 dichtend in einem Bremskraftverstärkergehäuse 20 verlagerbar geführt ist. In diesem Bremskraftverstärkergehäuse 20 ist eine Kammeranordnung angeordnet, die in an sich bekannter Weise eine Arbeitskammer 22 und eine nicht gezeigte Unterdruckkammer aufweist, wobei Arbeitskammer und Unterdruckkammer über eine im Gehäuse 20 geführte bewegliche Wand (nicht gezeigt) voneinander getrennt sind. Im Betrieb kommt es zu Druckdifferenzen an der beweglichen Wand, die bekanntermaßen eine Servounterstützung eines Bremsvorgangs ermöglichen.

Das Steuerventil 14 weist ein in dem Steuerventilgehäuse 16 fixiertes Ventilelement 24 auf. Dieses ist über einen Ringabschnitt 26 mittels einer Klemmhülse 28 gegen eine Schulter 30 am Steuerventilgehäuse 16 gespannt. Die Spannkraft wird mittels einer Rückstellfeder 32 erreicht, die sich über einen Sicherungsring 34 an einer Durchmesserstufe des Krafteingangsglieds 12 abstützt. Das Ventilelement 24 weist eine elastische Membrane 36 auf, welche einem Dichtabschnitt 38, der durch eine eingelegte Ringscheibe 40 gegen unerwünschte Deformationen verstärkt ist, einen Bewegungsspielraum in Richtung der Längsachse A ermöglicht. Der Dichtabschnitt 38 weist eine im Wesentlichen orthogonal zur Längsachse A verlaufende Dichtfläche 42 auf. Diese wirkt mit einem umlaufenden Dichtvorsprung 44 am Steuerventilgehäuse dichtend zusammen. Ferner wirkt diese Dichtfläche 42 mit einem weiteren Dichtvorsprung 46 an einem Steuerkolben 48 zusammen, der zur gemeinsamen Bewegung mit dem Krafteingangsglied 12 gekoppelt ist. Der umlaufende Dichtvorsprung 46 bildet zusammen mit dem Dichtabschnitt 38 einen ersten Dichtsitz 50. Der Dichtring 44 bildet mit dem Dichtabschnitt 38 einen zweiten Dichtsitz 52.

In Folge einer Betätigung des Krafteingangsglieds 12 durch eine Beaufschlagung mit der Kraft F wird das Krafteingangsglied 12 in Fig. 1 nach links verlagert und nimmt dabei den Steuerkolben 48 mit. Dadurch wird der erste Dichtsitz 50 geöffnet, d.h. der Dichtvorsprung 46 hebt sich vom Dichtabschnitt 38 ab. Infolgedessen kommt es dazu, dass die gegenüber der Umgebungsatmosphäre U evakuierte und unter Unterdruck stehende Arbeitskammer 22 mit der Umgebungsatmosphäre U verbunden wird und je nach Druckdifferenz Umgebungsluft aus der Umgebungsatmosphäre U mit mehr oder weniger großer Strömungsgeschwindigkeit entsprechend den Strömungslinien S durch das Steuerventil 14 in die Arbeitskammer 22 einströmt.

Um die eingangs erwähnten Strömungsgeräusche dabei zu unterdrücken, ist bei der in Fig. 1 gezeigten Ausführungsform der Erfindung die Klemmhülse 28 mit einem Führungskanal 54 versehen, der einen Durchmesser D und eine Länge L aufweist. Der Durchmesser D ist derart bestimmt, dass sich unter Berücksichtigung des Durchmessers D des Krafteingangsglieds 12 eine Strömungsöffnung ergibt, die eine Fläche in der Größenordnung von 110 bis 160 mm² aufweist. Die Länge L liegt im Bereich zwischen 6 und 14 mm. Der Eintrittsbereich 56 des Führungskanals 54 ist harmonisch abgerundet, indem die Klemmhülse in diesem Eintrittsbereich 56 kantenfrei ausgebildet ist.

Man erkennt, dass der Durchmesser D des Führungskanals 56 erheblich kleiner ist als der effektive Strömungsdurchmesser E des ersten Dichtsitzes 50, der bei einer Aktivierung des Unterdruckbremskraftverstärkers 10 wirksam wird. Durch diese Maßnahmen, d.h. die Durchmesserwahl sowie die Längendimensionierung des Führungskanals 54, lassen sich die Eintrittströmung S durch das Steuerventil 14 beruhigen und dadurch die von Fahrgästen als störend empfundenen Ansauggeräusche des Unterdruckbremskraftverstärkers 10 minimieren.

Nachzutragen bleibt, dass an das Unterdruckbremskraftverstärkergehäuse 20 ein Gummibalg 58 angekoppelt ist, der das Steuerventil 14 gegen Umgebungseinflüsse schützt, wobei dieser Gummibalg 58 Durchtrittsöffnungen 60 aufweist. Ferner erkennt man, dass der Dichtabschnitt 38 des Ventilelements 24 über eine Vorspannfeder 62 an der Klemmhülse 28 abgestützt ist. Diese Vorspannfeder 62 spannt den Dichtbereich 38 in Fig. 1 nach links, um eine Anlage mit den Dichtvorsprüngen 44 und/oder 46 je nach Betriebssituation zu gewährleisten.

Ferner bleibt nachzutragen, dass der Dichtsitz 52 beim Öffnen eine Verbindung zwischen Arbeitskammer und Unterdruckkammer bereitstellt.

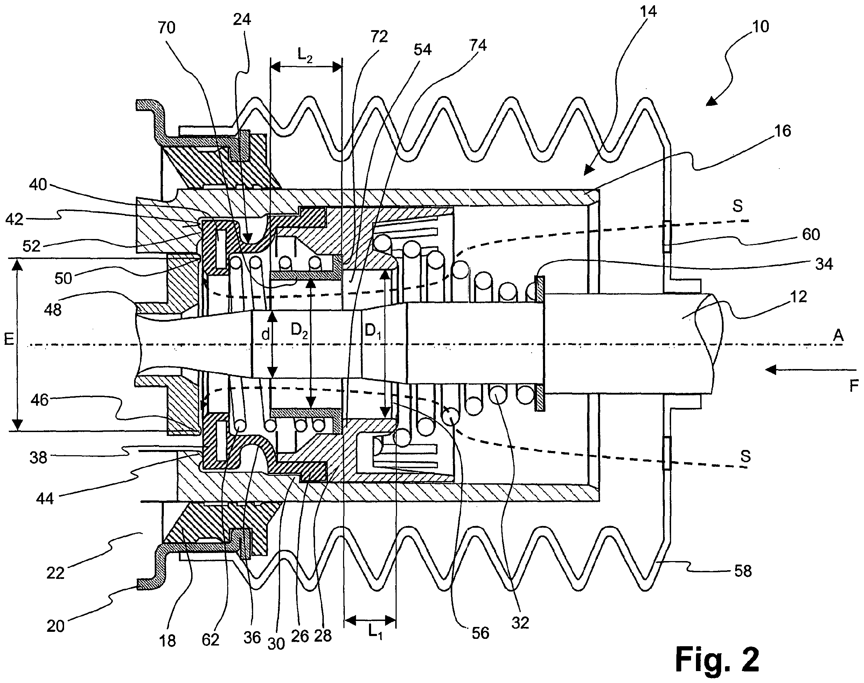

Die zweite Ausführungsform der Erfindung gemäß Fig. 2 entspricht weitgehend der ersten Ausführungsform. Im Folgenden soll daher nur auf die Unterschiede zwischen den beiden Ausführungsformen eingegangen werden. Zur Vermeidung von Wiederholungen und zur Erleichterung des Verständnisses werden für dieselben Komponenten dieselben Bezugszeichen verwendet, wie mit Bezug auf Fig. 1.

Der einzige Unterschied zwischen der Ausführungsform gemäß Fig. 1 und der Ausführungsform gemäß Fig. 2 besteht darin, dass bei der Ausführungsform gemäß Fig. 2 zusätzlich zu dem Führungskanal 54 in der Klemmhülse 28 eine weitere Führungskanalhülse 70 vorgesehen ist. Diese Führungskanalhülse 70 weist einen Radialvorsprung 72 auf, der sich von dem in Fig. 2 rechten Ende der Führungskanalhülse 70 radial auswärts erstreckt und gegen eine entsprechende Schulter 74 der Klemmhülse mit der Feder 62 gespannt ist. Die Führungskanalhülse 70 weist zusätzlich zu der Länge L₁ des Führungskanals 54 in der Klemmhülse 28 eine Länge L₂ auf, die im Bereich zwischen 6 und 14 mm liegt. Die Länge L₁ kann dementsprechend kürzer gewählt werden. Der Durchmesser D₂ der Führungskanalhülse 70 ist kleiner gewählt als der Durchmesser D₁ der Klemmhülse 28. Dadurch ergibt sich ein Durchmessersprung beim Eintritt in die Führungskanalhülse 70 der in Fig. 2 scharf ausgebildet ist. Dieser kann aber auch durch Abrundung weniger scharfkantig ausgebildet sein. Der Durchmesser D₂ ist jedenfalls deutlich kleiner als der Durchmesser E des beim Ansaugen von Umgebungsluft wirksamen Dichtsitzes 50.

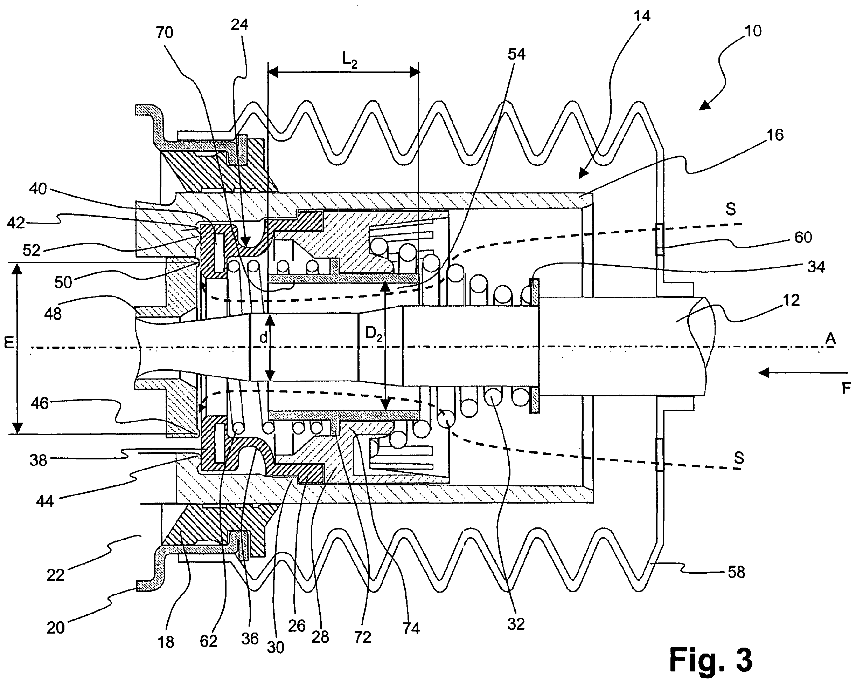

Fig. 3 zeigt eine weitere Ausführungsform der Erfindung, die sich an die Ausführungsform gemäß Fig. 2 anlehnt. Der einzige Unterschied besteht darin, dass sich die Führungskanalhülse 70' über den Radialvorsprung 72 in axialer Richtung hinaus in Fig. 3 nach links und nach rechts erstreckt. Dadurch kann die Länge L₂ des Führungskanals 54 je nach Bedarf verlängert werden, um die Strömungseigenschaften des Führungskanals und dadurch auch seine akustischen Eigenschaften entsprechend positiv mit dem Ziel der Geräuschreduzierung zu beeinflussen.

Die Erfindung sieht insgesamt durch geeignete Dimensionierung des Führungskanals 54 hinsichtlich seiner Länge und seines effektiven Strömungsdurchmessers eine einfache und wirksame Möglichkeit vor, als störend empfundene Strömungsgeräusche zu reduzieren bzw. zu minimieren.

## Patentansprüche

1. Unterdruckbremskraftverstärker (10) für eine Kraftfahrzeugbremsanlage, umfassend
- ein stangenförmiges Krafteingangsglied (12), das mit einem Bremspedal gekoppelt oder koppelbar ist,
- ein Steuerventil (14), das über das Krafteingangsglied (12) betätigbar ist,
- eine Kammeranordnung mit einer Unterdruckkammer, die mit einer Unterdruckquelle verbindbar ist, sowie mit einer Arbeitskammer (22), die nach Maßgabe der Betätigung des Krafteingangsglieds (12) wahlweise mit der Unterdruckkammer und mit der Umgebungsatmosphäre (U) verbindbar ist,
wobei das Steuerventil (14) einen über das Krafteingangsglied (12) betätigbaren Steuerkolben (48) aufweist, der zusammen mit einem Ventilelement (24) einen Dichtsitz (50) mit einem Dichtsitzdurchmesser (E) zwischen Arbeitskammer (22) und Umgebungsatmosphäre (U) bildet, wobei im Bereich nahe dem Dichtsitz (50) ein Führungskanal (54) vorgesehen ist, durch den beim Öffnen des Dichtsitzes (50) infolge einer Druckdifferenz Luft aus der Umgebungsatmosphäre (U) in die Arbeitskammer (22) einströmt,
**dadurch gekennzeichnet, dass** das Steuerventil (14) eine Klemmhülse (28) aufweist, die zum Festklemmen eines Befestigungsabschnitts (26) des Ventilelements (24) in einem Steuerventilgehäuse (16) des Steuerventils (14) vorgesehen ist, wobei die Klemmhülse (28) einen radial inneren zylindrischen Abschnitt aufweist, der den Führungskanal (54) zumindest teilweise bildet, und dass dieser Führungskanal (54) sich in axialer Richtung mit konstantem Strömungsdurchmesser (D₁; D₂) über eine vorbestimmte Länge (L; L₂) erstreckt, wobei der Strömungsdurchmesser (D₁; D₂) kleiner oder gleich dem Dichtsitzdurchmesser (E) ist.

2. Unterdruckbremskraftverstärker (10) nach Anspruch 1,
**dadurch gekennzeichnet, dass** der Führungskanal (54) zumindest teilweise von einer Führungskanalhülse (70) gebildet ist, die in dem Steuerventilgehäuse (16), vorzugsweise unter Vermittlung der Klemmhülse (28), gelagert ist.

3. Unterdruckbremskraftverstärker (10) nach Anspruch 2,
**dadurch gekennzeichnet, dass** die Führungskanalhülse (70) einen Radialvorsprung (72) aufweist, mit dem sie in dem Steuerventilgehäuse (16), vorzugsweise an einer Durchmesserstufe (74) der Klemmhülse (28), gelagert ist.

4. Unterdruckbremskraftverstärker (10) nach Anspruch 2 oder 3,
**dadurch gekennzeichnet, dass** sich die Führungskanalhülse (70) ausgehend von dem Radialvorsprung (72) in wenigstens einer axialen Richtung zur Ausbildung des Führungskanals (54) erstreckt.

5. Unterdruckbremskraftverstärker (10) nach einem der vorangehenden Ansprüche,
**dadurch gekennzeichnet, dass** der Führungskanal (54) gestuft mit Strömungskanalabschnitten unterschiedlichen Strömungsdurchmessern ausgebildet ist und sich in Richtung zum Ventilsitz (50) hin verengt, wobei der Strömungskanalabschnitt mit dem kleinsten Strömungsdurchmesser kleiner oder gleich dem Dichtsitzdurchmesser (E) ist.

6. Unterdruckbremskraftverstärker (10) nach Anspruch 5,
**dadurch gekennzeichnet, dass** der Führungskanal (54) im Bereich von Strömungsdurchmesserstufen abgerundet ausgebildet ist.

7. Unterdruckbremskraftverstärker (10) nach einem der vorangehenden Ansprüche,
**dadurch gekennzeichnet, dass** der Führungskanal (54) in seinem der Umgebungsatmosphäre (U) zugewandten Eintrittsbereich (56) harmonisch abgerundet ausgebildet ist.

8. Unterdruckbremskraftverstärker (10) nach einem der vorangehenden Ansprüche,
**dadurch gekennzeichnet, dass** sich das Krafteingangsglied (12) durch den Führungskanal (54) im Wesentlichen konzentrisch zu diesem hindurch erstreckt.

9. Unterdruckbremskraftverstärker (10) nach einem der vorangehenden Ansprüche,
**gekennzeichnet durch** wenigstens ein Filterelement, das stromaufwärts des Führungskanals (54) angeordnet ist.

10. Unterdruckbremskraftverstärker (10) nach einem der vorangehenden Ansprüche,
**dadurch gekennzeichnet, dass** die vorbestimmte Länge des Führungskanals (54) zwischen 6 mm und 14 mm liegt.

11. Unterdruckbremskraftverstärker (10) nach einem der vorangehenden Ansprüche,
**dadurch gekennzeichnet, dass** der Strömungsdurchmesser (D₁; D₂) derart bemessen ist, dass sich eine Strömungsöffnung mit einer effektiven Fläche zwischen 110 mm² und 160 mm² ergibt.

## Claims

1. A vacuum brake booster (10) for a motor vehicle brake system, comprising
- a rod-shaped force input member (12) which is coupled or may be coupled with a brake pedal,
- a control valve (14) which may be actuated via the force input member (12),
- a chamber arrangement with a vacuum chamber, which is connectable to a vacuum source as well as to a working chamber (22), which in accordance with the actuation of the force input member (12) is optionally connectable to the vacuum chamber and to the ambient atmosphere (U),
wherein the control valve (14) comprises a control piston (48) which may be actuated via the force input member (12), which together with a valve element (24) forms a sealing seat (50) with a sealing seat diameter (E) between the working chamber (22) and the ambient atmosphere (U), wherein in the region close to the sealing seat (50) a guiding channel (54) is provided through which air flows from the ambient atmosphere (U) into the working chamber (22) upon opening of the sealing seat (50) due to a pressure difference,
**characterized in that** the control valve (14) has a clamping sleeve (28) which is provided for firmly clamping a fastening section (26) of the valve element (24) in a control valve housing (16) of the control valve (14), wherein the clamping sleeve (28) comprises a radial inner cylindrical section which at least partially forms the guiding channel (54), and **in that** this guiding channel (54) extends over a predetermined length (L; L₂) in the axial direction with a constant flow diameter (D₁; D₂), wherein the flow diameter (D₁; D₂) is smaller than or equal to the sealing seat diameter (E).

2. The vacuum brake booster (10) according to Claim 1,
**characterized in that** the guiding channel (54) is formed at least partially by a guiding channel sleeve (70) which is mounted in the control valve housing (16), preferably via the clamping sleeve (28).

3. The vacuum brake booster (10) according to Claim 2,
**characterized in that** the guiding channel sleeve (70) has a radial projection (72) by which it is mounted in the control valve housing (16), preferably on a diameter step (74) of the clamping sleeve (28).

4. The vacuum brake booster (10) according to Claim 2 or 3,
**characterized in that** the guiding channel sleeve (70) extends starting from the radial projection (72) in at least one axial direction to form the guiding channel (54).

5. The vacuum brake booster (10) according to one of the previous claims,
**characterized in that** the guiding channel (54) is of a stepped form with flow channel sections of different flow diameters and narrows in the direction towards the valve seat (50), wherein the flow channel section with the smallest flow diameter is smaller than or equal to the sealing seat diameter (E).

6. The vacuum brake booster (10) according to Claim 5,
**characterized in that** the guiding channel (54) is of rounded form in the region of flow diameter steps.

7. The vacuum brake booster (10) according to one of the previous claims,
**characterized in that** the guiding channel (54) is smoothly rounded formed in its inlet region (56) which faces the ambient atmosphere (U).

8. The vacuum brake booster (10) according to one of the previous claims,
**characterized in that** the force input member (12) extends through the guiding channel (54) substantially concentrically to it.

9. The vacuum brake booster (10) according to one of the previous claims,
**characterized by** at least one filter element which is arranged upstream of the guiding channel (54).

10. Vacuum brake booster (10) according to one of the previous claims,
**characterized in that** the predetermined length of the guiding channel (54) ranges between 6 mm and 14 mm.

11. Vacuum brake booster (10) according to one of the previous claims,
**characterized in that** the flow diameter (D₁; D₂) is dimensioned such that a flow opening results with an effective area between 110 mm² and 160 mm².

## Revendications

1. Servofrein à dépression (10) pour un système de freinage de véhicule automobile, comprenant
- un élément d'entrée de force en forme de tige (12) couplé ou pouvant être couplé à une pédale de frein,
- une soupape de commande (14) qui peut être actionnée par l'intermédiaire de l'élément d'entrée de force (12),
- un ensemble de chambres comprenant une chambre à dépression, qui peut être reliée à une source de vide, et une chambre de travail (22) qui, en fonction de l'actionnement de l'élément d'entrée de force (12), peut être reliée sélectivement à la chambre à dépression et à l'atmosphère ambiante (U),
dans lequel la soupape de commande (14) présente un piston de commande (48) pouvant être actionné par l'élément d'entrée de force (12), qui forme conjointement avec un élément de soupape (24) un siège d'étanchéité (50) ayant un diamètre de siège d'étanchéité (E) entre la chambre de travail (22) et l'atmosphère ambiante (U), dans lequel, dans la région proche du siège d'étanchéité (50), est prévu un canal de guidage (54) à travers lequel, lors de l'ouverture du siège d'étanchéité (50), de l'air de l'atmosphère environnante (U) entre dans la chambre de travail (22) par suite d'une différence de pression,
**caractérisé en ce que** la soupape de commande (14) présente une douille de serrage (28) qui est prévue pour serrer une partie de fixation (26) de l'élément de soupape (24) dans un boîtier de soupape de commande (16) de la soupape de commande (14), la douille de serrage (28) présentant une partie cylindrique radialement intérieure qui forme au moins partiellement le canal de guidage (54), et **en ce que** ce canal de guidage (54) s'étend dans la direction axiale avec un diamètre d'écoulement constant (D₁; D₂) sur une longueur prédéterminée (L ; L₂), le diamètre d'écoulement (D₁; D₂) étant inférieur ou égal au diamètre de siège d'étanchéité (E).

2. Servofrein à dépression (10) selon la revendication 1,
**caractérisé en ce que** le canal de guidage (54) est formé au moins partiellement par une douille de canal de guidage (70) qui est montée dans le boîtier de soupape de commande (16), de préférence par l'intermédiaire de la douille de serrage (28).

3. Servofrein à dépression (10) selon la revendication 2,
**caractérisé en ce que** la douille de canal de guidage (70) présente une saillie radiale (72) par lequel elle est montée dans le boîtier de soupape de commande (16), de préférence sur un étage de diamètre (74) de la douille de serrage (28).

4. Servofrein à dépression (10) selon l'une des revendications 2 ou 3,
**caractérisé en ce que** la douille de canal de guidage (70) s'étend à partir de la saillie radiale (72) dans au moins une direction axiale pour former le canal de guidage (54).

5. Servofrein à dépression (10) selon l'une des revendications précédentes,
**caractérisé en ce que** le canal de guidage (54) est étagé avec des parties de canal d'écoulement de différents diamètres d'écoulement et se rétrécit en direction du siège de soupape (50), la partie de canal d'écoulement présentant le plus petit diamètre d'écoulement étant inférieure ou égale au diamètre de siège d'étanchéité (E).

6. Servofrein à dépression (10) selon la revendication 5,
**caractérisé en ce que** le canal de guidage (54) est arrondi dans la zone des étages de diamètre d'écoulement.

7. Servofrein à dépression (10) selon l'une des revendications précédentes,
**caractérisé en ce que** le canal de guidage (54) est harmonieusement arrondi dans sa zone d'entrée (56) tournée vers l'atmosphère ambiante (U).

8. Servofrein à dépression (10) selon l'une des revendications précédentes,
**caractérisé en ce que** l'élément d'entrée de force (12) s'étend à travers le canal de guidage (54) de manière sensiblement concentrique à celui-ci.

9. Servofrein à dépression (10) selon l'une des revendications précédentes,
**caractérisé par** au moins un élément filtrant disposé en amont du canal de guidage (54).

10. Servofrein à dépression (10) selon l'une des revendications précédentes,
**caractérisé en ce que** la longueur prédéterminée du canal de guidage (54) est comprise entre 6 mm et 14 mm.

11. Servofrein à dépression (10) selon l'une des revendications précédentes,
**caractérisé en ce que** le diamètre d'écoulement (D₁; D₂) est dimensionné de telle sorte qu'il en résulte une ouverture d'écoulement ayant une surface efficace comprise entre 110 mm² et 160 mm².
